# EUROPEAN PATENT SPECIFICATION

(11) **EP 3 172 432 B1**
(45) Date of publication and mention of the grant of the patent: **08.04.2020**
(21) Application number: 15825142.1
(22) Date of filing: 24.07.2015
(51) Int. Cl.: F03B 13/18

(54) **METHOD FOR DEPLOYING AND RECOVERING A WAVE ENERGY CONVERTER**
VERFAHREN ZUM EINSETZEN UND ZURÜCKHOLEN EINES WELLENENERGIEWANDLERS
PROCÉDÉ PERMETTANT DE DÉPLOYER ET DE RÉCUPÉRER UN CONVERTISSEUR D'ÉNERGIE DES VAGUES

(30) Priority: 24.07.2014 US 201462028582 P
(43) Date of publication of application: 31.05.2017
(73) Proprietor: Oscilla Power Inc., Seattle, WA 98103 (US)
(72) Inventor: MUNDON, Timothy R., Seattle, WA 98103 (US)
(74) Representative: HGF Limited
(86) International application number: PCT/US2015/041997
(87) International publication number: WO 2016/014947

(56) References cited:
- WO-A2-2012/070941
- DE-A1-102010 015 156
- US-A1- 2010 133 843
- US-A1- 2011 155 039
- US-B1- 6 435 774
- US-B2- 7 877 994

## Description

### BACKGROUND

Large-scale marine equipment is often transported as separate pieces and then assembled on location. For equipment that operates in open water, individual pieces may be hauled to the intended location, then assembling the several pieces together either on a vessel or while the pieces are floating or submerged in the water. However, hauling disassembled pieces of equipment may require substantial vessel capacity. On-site assembly can also be costly due to the complexity of assembling systems in limited spaces and the cost of vessels to be present during the assembly process.

Alternatively, equipment may be partially or fully assembled and then hauled in operational form to the intended location. However, hauling equipment in its assembled form may present some obstacles because of size or geometry.

WO 2012/070941 discloses a floating marine structure comprising at least one leg having first buoyancy means arranged in a lower part of the at least one leg to provide a first buoyancy, and a float element having second buoyancy means to provide a second buoyancy, wherein the sub-structure and the float element are constructed to allow relative wave induced motion with respect to each other in a substantially vertical direction.

DE 10 2010 015156 discloses a wave energy machine having multiple hydrodynamic active surfaces or bodies which are involved in the transformation of the wave energy into usable energy. One of the wave force surfaces is changed as a selected absorption surface in another selectable manner in order to minimize or enlarge the impact of wave energy on the wave energy machine.

### SUMMARY

Embodiments of the system are presented for transporting a buoy and a heave plate. One embodiment of the system includes a buoy and a heave plate. A bottom surface of the buoy has a first geometrical shape which is convex. An upper surface of the heave plate has a geometrical shape which is concave and complementary to the first geometrical shape of the buoy. The complementary shapes of the buoy and the heave plate facilitate coupling of the heave plate to the outer surface of the buoy in a transport mode. Other embodiments of the system are also described.

Embodiments of a method for transporting a buoy and heave plate are also described. One embodiment of the method includes arranging the heave plate having an upper concave surface in a retracted position relative to a flotation device having a complementary bottom convex surface. The method also includes transporting the flotation device and the heave plate to a deployment site while the heave plate is in the retracted position relative to the flotation device. The method also includes deploying the flotation device and the heave plate at the deployment site, with the heave plate in a deployed position relative to the flotation device.

Other aspects and advantages of embodiments of the present invention will become apparent from the following detailed description, taken in conjunction with the accompanying drawings, illustrated by way of example of the principles of the invention.

### BRIEF DESCRIPTION OF THE DRAWINGS

Fig. 1 illustrates a schematic diagram of one embodiment of a buoy with a first geometrical surface.
Fig. 2 illustrates a schematic diagram of one embodiment of a heave plate with a geometric shape that is complementary to the first geometrical surface of the buoy of Fig. 1.
Fig. 3 illustrates a schematic diagram of one embodiment of a deployment system for transporting a buoy and heave plate engaged in a transport mode.
Fig. 4 illustrates another embodiment of the deployment system of Fig. 3 with the buoy and the heave plate in a deployed mode.
Fig. 5 illustrates one embodiment of a tether with magnetostrictive energy harvesters disposed between the buoy and the heave plate in the deployed mode.

### DETAILED DESCRIPTION

The
following more detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The described
embodiments are to be considered in all respects only as illustrative and not restrictive. The scope of the invention is, therefore, indicated by the appended claims rather than by this detailed description.

Reference throughout this specification to features, advantages, or similar language does not imply that all of the features and advantages that may be realized with the present invention should be or are in any single embodiment οf the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Reference throughout this specification to "one embodiment," "an embodiment," or similar language means that a particular feature, structure, or characteristic described in connection with the indicated embodiment is included in at least one embodiment of the present invention. Thus, the phrases "in one embodiment," "in an embodiment," and similar language throughout this specification may, but do not necessarily, all refer to the same embodiment.

While many embodiments are described herein, at least some of the described embodiments facilitate deployment of a wave energy converter. In particular, methods and associated structures and subsystems facilitate deployment of a wave energy converter which includes at least one surface float and at least one heave plate. The surface float and heave plate are first assembled such that the surface float and heave plate are tightly mechanically coupled together. Then the joined surface float and heave plate can towed to the deployment site together. Once at the deployment site, the heave plate is detached and lowered down to a specific depth below the surface float.

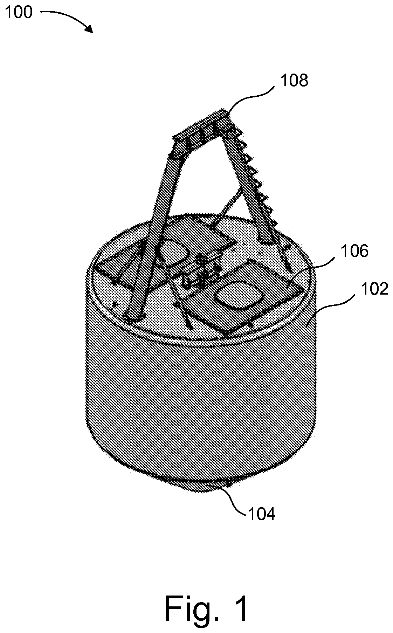

Fig. 1 illustrates a schematic diagram of one embodiment of a buoy 100. The illustrated buoy includes a flotation body 102 and a first geometrical surface 104. The flotation body 102 may include one or more interior spaces that are enclosed by access doors or panels 106. The interior spaces may house any sort of equipment such as tethers, cables, batteries, winches, and other electromechanical equipment or marine equipment. The illustrated buoy 100 also includes a tower 108 mounted on the top surface of the flotation body 102, The tower may be used to mount or engage other equipment, as described herein.

In the depicted embodiment, the bottom surface 104 of the flotation body 102 is has a convex shape so that at least a portion of the bottom surface 104 extends downward. The specific size, shape, or curvature of the bottom surface 104 may vary in different embodiments. In alternative examples, part or all of the bottom surface 104 may have a concave geometry. In further examples, the bottom surface 104 may have a combination of convex and concave geometries.

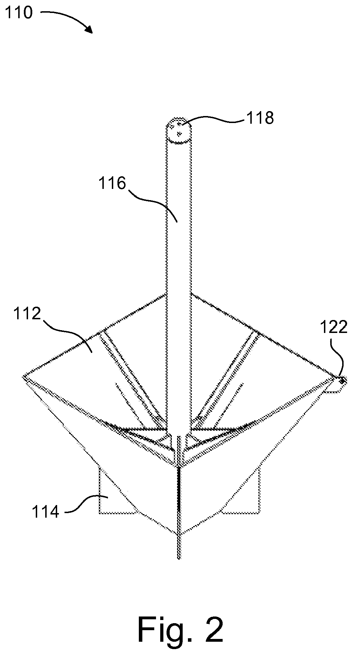

Fig. 2 illustrates a schematic diagram of one embedment of a heave plate 110 with a geometric shape that is complementary to the first geometrical surface 104 of the buoy 100 of Fig. 1. Although the depicted heave plate 110 includes a specific arrangement of physical features to perform certain functions, other embodiments of the heave plate may include fewer or more features to perform fewer or more functions.

The illustrated heave plate 110 includes asymmetrical surfaces 112 to form an asymmetrical heave plate. As referred to herein, and asymmetrical heave plate has a physical geometry which facilitates different levels of resistance to movement in opposite vertical directions. For example, the illustrated heave plate 110 has a concave upper surface geometry and a corresponding convex lower surface geometry, which will facilitate faster movement in the downward direction and slower movement in the upward direction. In some embodiments, fins 114 or other guiding structures are attached to the surfaces 112 in order to help guide the heave plate 110 in predominantly vertical directions, as the buoy 100 pulls the heave plate 110 up in response to rising water levels, and as the heave plate 110 is pulled down by gravity when the buoy falls in receding water levels.

The depicted heave plate 110 also includes a post 116 or column. In some embodiments, the post 116 facilitates alignment of the heave plate 110 with the buoy 100 in a transport mode. In general, the post 116 may engage with a corresponding cylindrical chamber in the buoy 100. As the post enters the cylinder, the heave plate surfaces 112 are drawn in toward the bottom surface 104 of the buoy 100, allowing the heave plate 110 to engage with the buoy 100 in a very secure manner. Once the post 116 is fully inserted into the cylinder of the buoy 100, one or more locking mechanisms may be used to fasten the two components together. For example, the illustrated post 116 includes one or more mounting holes 118 which may be used to lock or pin the heave plate 110 into place when engaged in the transport mode with the buoy 100. In other embodiments, a separate flange 120 may be used to lock or couple the heave plate 110 to the buoy 100. Other embodiments may utilize any form or flange, hook, loop, lock, or other type of coupling device. Also, any type of locking mechanisms, including bolting or latching mechanisms, may be used to lock the heave plate 110 to the buoy 100.

Although the illustrated heave plate 110 only includes a single post 116, other embodiments may include more than one post 116. In such cases, the buoy 100 may include a corresponding number of holes and/or locking mechanisms for each post 116. Also, a corresponding number of tethers, attachments, and other features may be included.

In other embodiments, similar functionality may be achieved by using structures which are not necessarily cylindrical in form. For example, flanges, straps, cords, or any other suitable alignment and/or attachment structures may be used.

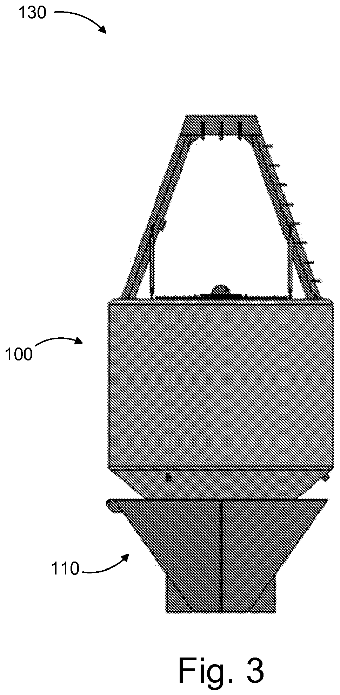

Fig. 3 illustrates a schematic diagram of one embodiment of a deployment system 130 for transporting a buoy 100 and heave plate 110 engaged in a transport mode. In the illustrated embodiment, the heave plate 110 is essentially coupled or mounted to the buoy 100 in a fixed position. Surfaces or components of the heave plate 110 may be in actual physical contact with the buoy 100. For example, the inside surface of the heave plate 110 may be in contact with the bottom surface of the buoy 100. Also, the top of the post (see Fig. 2) of the heave plate 110 may be locked into position at approximately the top surface of the buoy 100. In other embodiments, the post of the heave plate may extend further above or below the top surface of the buoy 100.

In some embodiments, the buoy 100 and heave plate 110 are mechanically coupled in such a fashion that they can be decoupled mechanically either remotely through electronic control or mechanically by at least one operator from the top surface of the buoy 100.

With regard to deployment into an ocean or other water environment, the buoy 100 and heave plate 110 can be coupled together in the transport mode prior to being put in the water. The buoy 100 and heave plate 110 can then be transported to and put in the water, for example, using a large crane or rolled in with wheels attached to the system or an external carriage using a ramp. Embodiments of the invention are not necessarily limited by the type of mechanisms that might be used to lift, push, pull, or otherwise move the deployment system 130. The deployment system 130 can then be hauled or towed to the deployment site using an appropriately sized marine vessel.

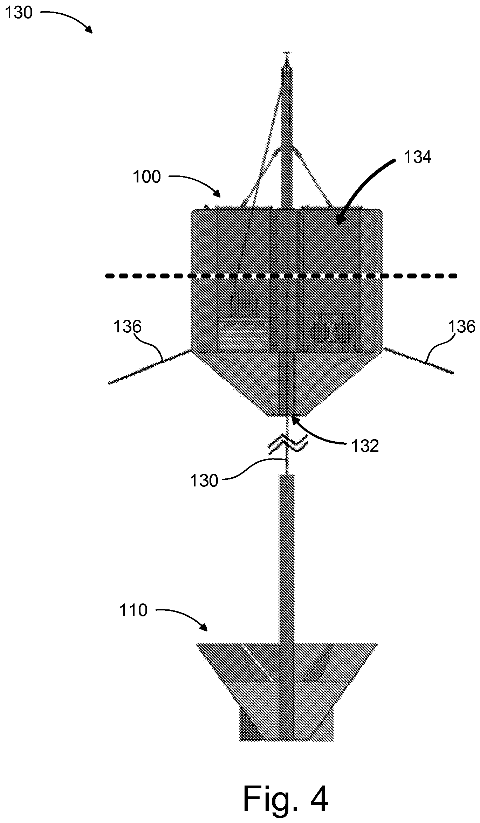

Fig. 4 illustrates another embodiment of the deployment system 130 of Fig. 3 with the buoy 100 and the heave plate 110 in a deployed mode. A hypothetical water level is indicated by the dashed horizontal line. In some embodiments, the heave plate 110 is detached from the buoy 100 and allowed to suspend from a tether 130 attached between the buoy 100 and heave plate 110. In some embodiments, the heave plate 110 is connected to the buoy 100 with one or more tethers 130 that are not rigid and so can be rolled on a mandrel or pulley during pre-integration and transport. In some embodiments, these tethers may be mechanically connected to the heave plate either during the pre-integration stage or at a later stage at the site.

The illustrated embodiment also shows the interior channel 132 through which the tether 130 passes in the deployment mode and into which the post 116 engages in the transport mode. In other embodiments, the tether 130 and post 116 may utilize separate channels.

The illustrated embodiment also shows internal chambers 134 within the body 102 of the buoy 100, accessible through the access doors 106. Depending on the size of the chambers 134, any type of equipment may be housed or stored in each of the internal chambers 134. In some embodiments, the chambers 134 house a tether controller, an electrical generation controller, batteries or other storage devices, and other equipment used in the deployment of the buoy 100 and heave plate 110.

In some embodiments, the deployment system 130 is attached to one or more station keeping mooring lines 136 at the deployment site. The mooring lines 136 may be preinstalled or installed at the time the system is deployed.

In some embodiments, on board structures such as at least one winch and/or crane that may be used to gradually lower the heave plate 110 to as specific depth after the mechanical connection is disengaged. In some embodiments, the tether 130 may be locked again in place by using one or more locking mechanisms.

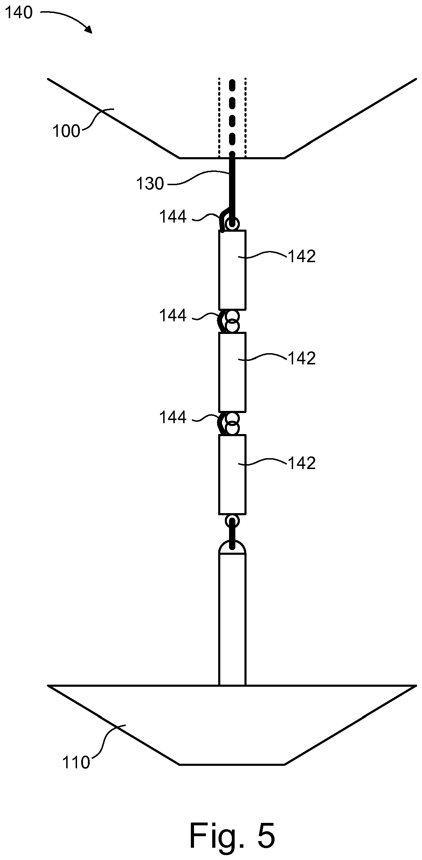

Fig. 5 illustrates one embodiment of a tether system 140 with magnetostrictive energy harvesters 142 disposed between the buoy 100 and the heave plate 100 in the deployed mode. In general, the harvesters 142 are coupled together in series with the tether 130 so that an upward force on the tether 130 results in a tensile force on the harvesters 142 as the heave plate 110 resists upward motion. The tensile force results in a change in magnetic flux within the harvesters 142, which include conductive wires to induce a charge or current in response to the change in magnetic flux. A separate conductive transmission line 144 is included or incorporated with the tether 130 to transmit the generated electrical power to electronic systems or storage batteries at the buoy 100. Other systems may utilize other types of tethers 130 and/or magnetostrictive energy harvesters 142.

In some embodiments, the heave plate 110 may be retracted for maintenance or decommissioning. In some embodiments, the system may be recovered for maintenance or decommissioning by going through the reverse of the deployment operations described above. In some embodiments, the locking mechanisms may be disengaged, the heave plate 110 may be gradually raised up close to the buoy 100 using the on-board winches and/or cranes and mechanically locked again to the buoy 100. In some embodiments, the system may then be towed in the transport mode to shore or to another vessel for maintenance or decommissioning.

In the above description, specific details of various embodiments are provided. However, some embodiments may be practiced with less than all of these specific details. In other instances, certain methods, procedures, components, structures, and/or functions are described in no more detail than to enable the various embodiments of the invention, for the sake of brevity and clarity.

Although the operations of the method(s) herein are shown and described in a particular order, the order of the operations of each method may be altered so that certain operations may be performed in an inverse order or so that certain operations may be performed, at least in part, concurrently with other operations. In another embodiment, instructions or sub-operations of distinct operations may be implemented in an intermittent and/or alternating manner.

Although specific embodiments of the invention have been described and illustrated, the invention is not to be limited to the specific forms or arrangements of parts so described and illustrated. The scope of the invention is to be defined by the claims appended hereto.

## Claims

1. A system comprising a buoy (100) with a flotation body (102) and a heave plate (110) coupled to the buoy (100), wherein:
a bottom surface (104) of the flotation body (102) has a first geometrical shape which is convex; and
an upper surface (112) of the heave plate (110) has a geometrical shape which is concave and complementary to the first geometrical shape of the flotation body (102) to facilitate coupling of the heave plate (110) to the bottom surface (104) of the flotation body (102) in a transport mode.

2. The system of claim 1, wherein at least a portion of the convex bottom surface (104) of the flotation body (102) extends into a cavity formed by the concave surface (112) of the heave plate (110) when the flotation body (102) and the heave plate (110) are engaged in the transport mode.

3. The system of claim 1, further comprising:
a coupling disposed on the heave plate (110) to engage and maintain the heave plate (110) in the transport mode.

4. The system of claim 1, wherein the buoy (100) further comprises:
an internal equipment chamber (134) to house electrical/mechanical equipment.

5. The system of claim 1, wherein the buoy (100) further comprises:
an internal channel passing through the flotation body (102) from the top surface to a bottom surface, wherein the internal channel is configured to house a heave plate post (116) in the transport mode.

6. The system of claim 5, further comprising:
at least one tether (130) coupled between the flotation body (102) and the heave plate (110).

7. The system of claim 6, further comprises:
a tower (108) disposed on a top surface of the buoy (100), wherein the tower (108) comprises a tether mount to engage the tether (130).

8. The system of claim 6, wherein the tether mount is linearly aligned with the internal channel passing through the flotation body (102).

9. The system of claim 6, further comprising:
at least one magnetostrictive energy harvester (142) coupled to the tether (130) between the flotation body (102) and the heave plate (110), wherein the magnetostrictive energy harvester (142) is configured to experience a tensile force in response to a mechanical force on the flotation body (102) away from the heave plate (110).

10. The system of claim 6, wherein the heave plate (110) further comprises:
at least one fin (114) disposed on an outer surface, wherein the fin is configured to influence vertical motion of the heave plate (110).

11. A method comprising:
arranging a heave plate (110) having an upper concave surface (112) in a retracted position relative to a buoy that comprises a flotation body (102) having a complementary bottom convex surface (104);
transporting the buoy (100) and the heave plate (110) to a deployment site while the heave plate (110) is in the retracted position relative to the buoy (100); and
deploying the buoy (100)and the heave plate (110) at the deployment site, with the heave plate (110) in a deployed position relative to the buoy (100).

12. The method of claim 11, further comprising:
maintaining a tether (130) in a retracted position while transporting the buoy (100) and the heave plate (110) to the deployment site, wherein a first part of the tether (130) is coupled to the buoy (100), and a second part of the tether (130) is coupled to the heave plate (110); and
extending the tether (130) to position the heave plate (110) in the deployed position below the buoy (100).

13. The method of claim 11, further comprising:
inducing electrical energy in a plurality of magnetostrictive energy harvesters (142) coupled to the tether (130) in response to relative forces on the buoy (100) and the heave plate (110).

14. The method of claim 11, further comprising:
storing the induced electrical energy in a battery.

## Patentansprüche

1. System, das eine Boje (100) mit einem Schwimmkörper (102) und einer mit der Boje (100) gekoppelten Tauchplatte (110),
wobei:
eine untere Oberfläche (104) des Schwimmkörpers (102) eine erste geometrische Form aufweist, die konvex ist; und
eine obere Oberfläche (112) der Tauchplatte (110) eine geometrische Form aufweist, die konkav und komplementär zu der ersten geometrischen Form des Schwimmkörpers (102) ist, um in einem Transportmodus die Kopplung der Tauchplatte (110) mit der unteren Oberfläche (104) des Schwimmkörpers (102) zu erleichtern.

2. System nach Anspruch 1, wobei sich mindestens ein Teil der konvexen unteren Oberfläche (104) des Schwimmkörpers (102) in eine durch die konkave Oberfläche (112) der Tauchplatte (110) gebildete Kavität erstreckt, wenn der Schwimmkörper (102) und die Tauchplatte (110) in dem Transportmodus miteinander eingreifen.

3. System nach Anspruch 1, ferner umfassend:
eine Kopplung, die sich an der Tauchplatte (110) befindet, um mit der Tauchplatte (110) einzugreifen und um diese in dem Transportmodus zu halten.

4. System nach Anspruch 1, wobei die Boje (100) ferner folgendes umfasst:
eine innere Ausrüstungskammer (134) zur Aufnahme elektrischer/mechanischer Ausrüstung.

5. System nach Anspruch 1, wobei die Boje (100) ferner folgendes umfasst:
einen inneren Kanal, der von der oberen Oberfläche zu einer unteren Oberfläche durch den Schwimmkörper (102) verläuft, wobei der innere Kanal so gestaltet ist, dass er in dem Transportmodus einen Tauchplattenbolzen (116) aufnimmt.

6. System nach Anspruch 5, ferner umfassend:
mindestens eine Leine (130), die zwischen dem Schwimmkörper (102) und der Tauchplatte (110) gekoppelt ist.

7. System nach Anspruch 6, ferner umfassend:
einen Turm (108), der sich auf einer oberen Oberfläche der Boje (100) befindet, wobei der Turm (108) eine Leinenbefestigung zum Eingriff mit der Leine (130) umfasst.

8. System nach Anspruch 6, wobei die Leinenbefestigung linear mit dem durch den Schwimmkörper (102) verlaufenden inneren Kanal ausgerichtet ist.

9. System nach Anspruch 6, ferner umfassend:
mindestens einen magnetostriktiven Energiesammler (142), der zwischen dem Schwimmkörper (102) und der Tauchplatte (110) mit der Leine (130) gekoppelt ist, wobei der magnetostriktive Energiesammler (142) so gestaltet ist, dass er als Reaktion auf eine mechanische Kraft auf den Schwimmkörper (102), weggehend von der Tauchplatte (110), eine Zugkraft erfährt.

10. System nach Anspruch 6, wobei die Tauchplatte (110) ferner folgendes umfasst:
mindestens eine Finne (114), die sich an einer äußeren Oberfläche befindet, wobei die Finne so gestaltet ist, dass sie die vertikale Bewegung der Tauchplatte (110) beeinflusst.

11. Verfahren, umfassend:
Anordnen einer Tauchplatte (110) mit einer oberen konkaven Oberfläche (112) an einer eingezogenen Position im Verhältnis zu einer Boje, die einen Schwimmkörper (102) mit einer komplementären unteren konvexen Oberfläche (104) umfasst;
Transportieren der Boje (100) und der Tauchplatte (110) an einen Ausbringungsort, während sich die Tauchplatte (110) im Verhältnis zu der Boje (100) an einer eingezogenen Position befindet; und
Ausbringen der Boje (100) und der Tauchplatte (110) an dem Ausbringungsort, wobei sich die Tauchplatte (110) im Verhältnis zu der Boje (100) an einer ausgebrachten Position befindet.

12. Verfahren nach Anspruch 11, ferner umfassend:
Halten einer Leine (130) an einer eingezogenen Position, während die Boje (100) und die Tauchplatte (110) an den Ausbringungsort transportiert werden, wobei ein erster Teil der Leine (130) mit der Boje (100) gekoppelt ist, und wobei ein zweiter Teil der Leine (130) mit der Tauchplatte (110) gekoppelt ist; und
Ausfahren der Leine (130), um die Tauchplatte (110) an der ausgebrachten Position unter der Boje (100) zu positionieren.

13. Verfahren nach Anspruch 11, ferner umfassend:
Induzieren elektrischer Energie in einer Mehrzahl mit der Leine (130) gekoppelter magnetostriktiver Energiesammler (142) als Reaktion auf relative Kräfte auf die Boje (100) und die Tauchplatte (110).

14. Verfahren nach Anspruch 11, ferner umfassend:
Speichern der induzierten elektrischen Energie in einer Batterie.

## Revendications

1. Système comprenant une bouée (100) avec un corps de flottaison (102) et une plaque de pilonnement (110) accouplée à la bouée (100),
une surface inférieure (104) du corps de flottaison (102) ayant une première forme géométrique qui est convexe ; et
une surface supérieure (112) de la plaque de pilonnement (110) ayant une forme géométrique qui est concave et complémentaire à la première forme géométrique du corps de flottaison (102) pour faciliter l'accouplement de la plaque de pilonnement (110) à la surface inférieure (104) du corps de flottaison (102) dans un mode transport.

2. Système selon la revendication 1, au moins une partie de la surface inférieure convexe (104) du corps de flottaison (102) s'étendant dans une cavité formée par la surface concave (112) de la plaque de pilonnement (110) lorsque le corps de flottaison (102) et la plaque de pilonnement (110) sont en prise dans le mode transport.

3. Système selon la revendication 1, comprenant en outre :
un accouplement disposé sur la plaque de pilonnement (110) pour venir en prise et maintenir la plaque de pilonnement (110) dans le mode transport.

4. Système selon la revendication 1, la bouée (100) comprenant en outre :
une chambre d'équipement interne (134) pour abriter les équipements électriques/mécaniques.

5. Système selon la revendication 1, la bouée (100) comprenant en outre :
un canal interne traversant le corps de flottaison (102) de la surface supérieure à une surface inférieure, le canal interne étant conçu pour loger un poteau de plaque de pilonnement (116) en mode transport.

6. Système selon la revendication 5, comprenant en outre :
au moins un câble d'attache (130) accouplé entre le corps de flottaison (102) et la plaque de pilonnement (110).

7. Système selon la revendication 6, comprenant en outre :
une tour (108) disposée sur une surface supérieure de la bouée (100), la tour (108) comprenant un support de câble d'attache pour venir en prise avec le câble d'attache (130).

8. Système selon la revendication 6, le support de câble d'attache étant aligné linéairement avec le canal interne traversant le corps de flottaison (102).

9. Système selon la revendication 6, comprenant en outre :
au moins un collecteur d'énergie magnétostrictif (142) accouplé au câble d'attache (130) entre le corps de flottaison (102) et la plaque de pilonnement (110), le collecteur d'énergie magnétostrictif (142) étant conçu pour subir une force de traction en réponse à une force mécanique sur le corps de flottaison (102) à l'opposé de la plaque de pilonnement (110).

10. Système selon la revendication 6, la plaque de pilonnement (110) comprenant en outre :
au moins une ailette (114) disposée sur une surface extérieure, l'ailette étant conçue pour influencer le mouvement vertical de la plaque de pilonnement (110).

11. Procédé comprenant les étapes suivantes :
disposition d'une plaque de pilonnement (110) ayant une surface supérieure concave (112) dans une position rétractée par rapport à une bouée qui comprend un corps de flottaison (102) ayant une surface convexe inférieure complémentaire (104) ;
transport de la bouée (100) et de la plaque de pilonnement (110) vers un site de déploiement alors que la plaque de pilonnement (110) est en position rétractée par rapport à la bouée (100) ; et
déploiement de la bouée (100) et de la plaque de pilonnement (110) sur le site de déploiement, la plaque de pilonnement (110) étant en position déployée par rapport à la bouée (100).

12. Procédé selon la revendication 11, comprenant en outre les étapes suivantes :
maintien d'un câble d'attache (130) dans une position rétractée tout en transportant la bouée (100) et la plaque de pilonnement (110) vers le site de déploiement, une première partie du câble d'attache (130) étant accouplée à la bouée (100), et une seconde partie du câble d'attache (130) étant accouplée à la plaque de pilonnement (110) ; et
extension du câble d'attache (130) pour positionner la plaque de pilonnement (110) dans la position déployée sous la bouée (100).

13. Procédé selon la revendication 11, comprenant en outre les étapes suivantes :
induction d'énergie électrique dans une pluralité de collecteurs d'énergie magnétostrictifs (142) accouplés au câble d'attache (130) en réponse aux forces relatives sur la bouée (100) et la plaque de pilonnement (110).

14. Procédé selon la revendication 11, comprenant en outre l'étape suivante :
stockage de l'énergie électrique induite dans une batterie.
